# EUROPEAN PATENT SPECIFICATION

(11) **EP 3 095 319 B1**
(45) Date of publication and mention of the grant of the patent: **20.06.2018**
(21) Application number: 16168142.4
(22) Date of filing: 03.05.2016
(51) Int. Cl.: A01G 25/09

(54) **A SPRINKLER IRRIGATION PLANT WITH A SELF-PROPELLING DRUM AND A ACTIVATING METHOD**
SPRINKLERBEWÄSSERUNGSANLAGE MIT SELBSTANGETRIEBENER TROMMEL UND AKTIVIERUNGSVERFAHREN
INSTALLATION D'IRRIGATION PAR ASPERSEUR DOTÉ D'UN TAMBOUR À AUTOPROPULSION ET MÉTHODE D'ACTIVATION

(30) Priority: 22.05.2015 IT UB20150784
(43) Date of publication of application: 23.11.2016
(73) Proprietor: Irrimec S.r.l., 20122 Milano (IT)
(72) Inventor: Turion, Jean Claude, 34170 Castelnau Le Lez (FR)
(74) Representative: Corradini, Corrado

(56) References cited:
- EP-A2- 1 482 207
- CN-U- 204 031 986
- CN-Y- 2 759 149
- DE-A1- 2 810 718
- DE-A1-102013 204 227
- US-A- 4 306 682

## Description

The present invention relates to a sprinkler irrigation plant with a self-propelling drum, comprising a mobile irrigator for sprinkle-irrigating large/medium size pieces of terrain, which is connected to a long water supply tube which in turn is connected to a large tube-winder drum about which the tube is wound, which drum is connected in turn to a source of irrigating water supply under pressure. US4306682 is considered as the closest prior art for independent claims 1 and 6. Figure 1 schematically illustrates a traditional irrigation plant to which the present invention relates.

The plant comprises a mobile irrigator A for irrigating large/medium sized pieces of terrain; in particular, though not exclusively, the irrigator is a long-range irrigator, of a type commonly used in agriculture for sprinkle-irrigating terrains of medium and large dimensions.

The irrigator A is connected to a long water supply tube B an opposite end of which is in turn connected to a large tube-winder drum D about which the tube is wound, which drum D is connected in turn to a source of irrigating water supply, placed under pressure by a pump.

The plant further comprises a hydraulic turbine M actuated by the irrigating water (it is crossed by a part of the water), able to supply energy for rotation of the drum D, which energy, via a mechanical geared transmission system, interposed between the turbine and the drum, produces rotation of the drum D, which in turn produces the winding of the tube B.

The irrigator is borne by a carriage A1 (wheeled or a sled) which rests on the ground and is drawn in translation on the terrain, along the zone to be irrigated, as it is drawn by the supply tube B which at the same time is wound, with a slow rotation, about the drum D, on which it forms a large reel.

To carry out a uniform irrigation (same quantity of water per unit of surface) it is necessary for the rotation velocity of the drum D, in the winding of the tube B, to be able to change in an adjustable way, as:
- during winding of the tube on the drum, the tube winds on layers of reel which increase in diameter; therefore, in order to keep the advancement velocity of the irrigator on the terrain constant, it is necessary to correspondingly reduce the rotation velocity of the drum.
- during the irrigation step it can be necessary to vary the advancement velocity of the irrigator on the terrain; this happens, typically, when the surface of the terrain to be irrigated borders a road, or has an irregular geometrical shape, and in these cases it is necessary to vary the angle or the direction of the irrigator jet, and it is also necessary, consequently, to vary the advancement velocity of the irrigator.

The turbine actuated by the irrigating water is able to provide the drum with a rotation velocity, which varies gradually and adjustably with a 1 to 2 ratio; this field of variability is sufficient only for compensating the variation of the diameter of the reel during the winding of the tube on the drum; it is practically impossible to obtain, with the hydraulic turbine, a field of variability that is greater than this.

In order to obtain a greater field of variability it is necessary to use a mechanical gear change system, additional to the turbine, which for example includes at least two different velocities in output, to be transmitted to the drum. A notable drawback, however, connected with this mechanical solution is that it includes a mechanical gear change which uses a grooved selector that passes from a coupling with a first cogged wheel to a coupling with a second cogged wheel, and this passage step is practically not realisable without completely stopping, or nearly so, the rotation of the drum, as there is high friction between the polyethylene tube and the terrain which creates, during the passage in the step of coupling between the mechanical organs, mechanical stresses that are excessively high and not supportable by the gearings.

Therefore this mechanical solution is not advantageous and practically not acceptable, as it requires relatively long times and interventions by personnel.

An aim of the present invention is to realise a mechanical system of geared transmission, interposed between the drum which comprises a gear-change group able to provide in output at least two different rotation directions for rotation of the drum, which obviate the above-described drawback, i.e. which can enable the mechanical gear change from a rotation velocity to another without interrupting the inertial rotation of the drum, thereby enabling a rapid mechanised management, which does not require manual intervention by the operator, and is programmable and/or manageable from a remote position. These and other aims are attained by the present invention as it is characterised in the claims.

The invention is set out in detail in the following with the aid of the accompanying figures which illustrate an embodiment thereof by way of non-exclusive example.

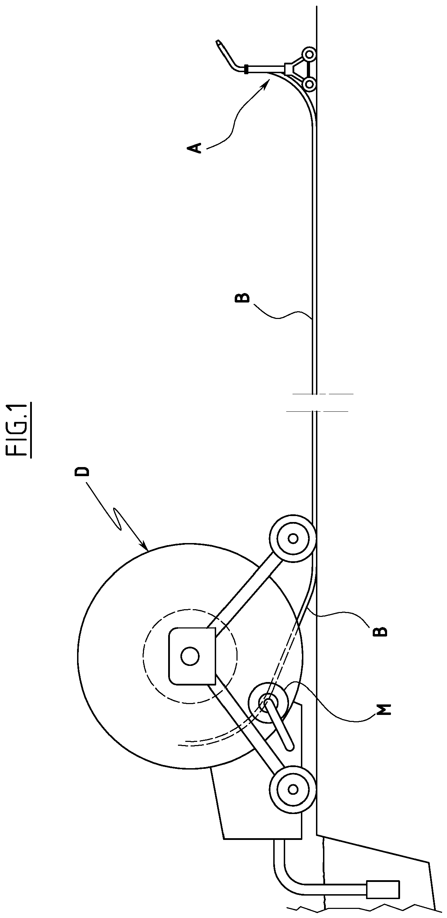

Figure 1 is a general schematic view of a sprinkler irrigation plant with a self-propelling drum according to the prior art and according to the present invention.
Figure 2 is a general view from above, partly sectioned in the parts pertinent to the invention, of a mechanical geared transmission system of the invention, interposed between the hydraulic turbine M and the tube-winder drum D, able to produce rotation of the drum D for winding the tube B.

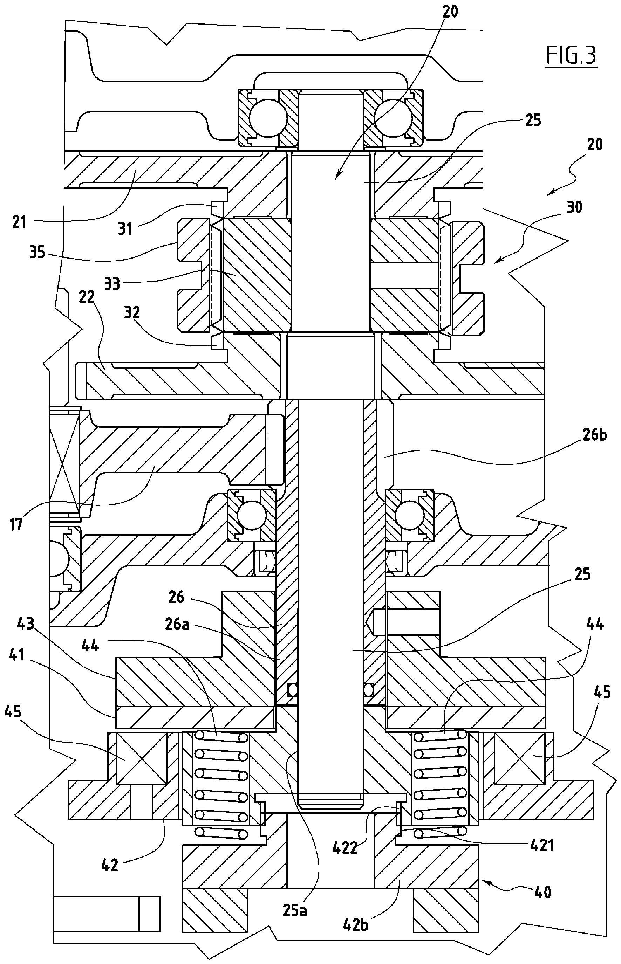

Figure 3 is a larger-scale detail of figure 2.

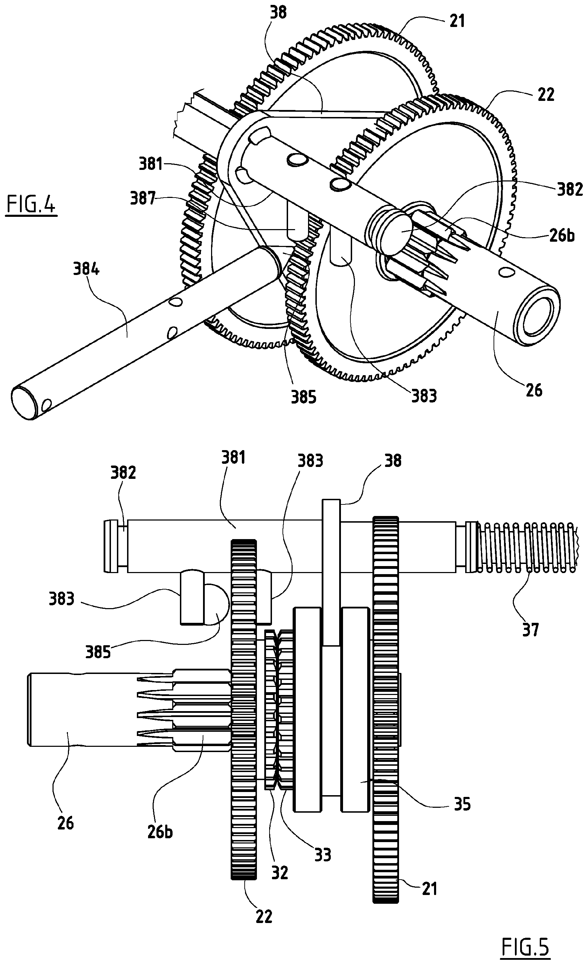

Figure 4 is a detail of figure 2 in perspective view.
Figure 5 is a view in vertical elevation of figure 4.

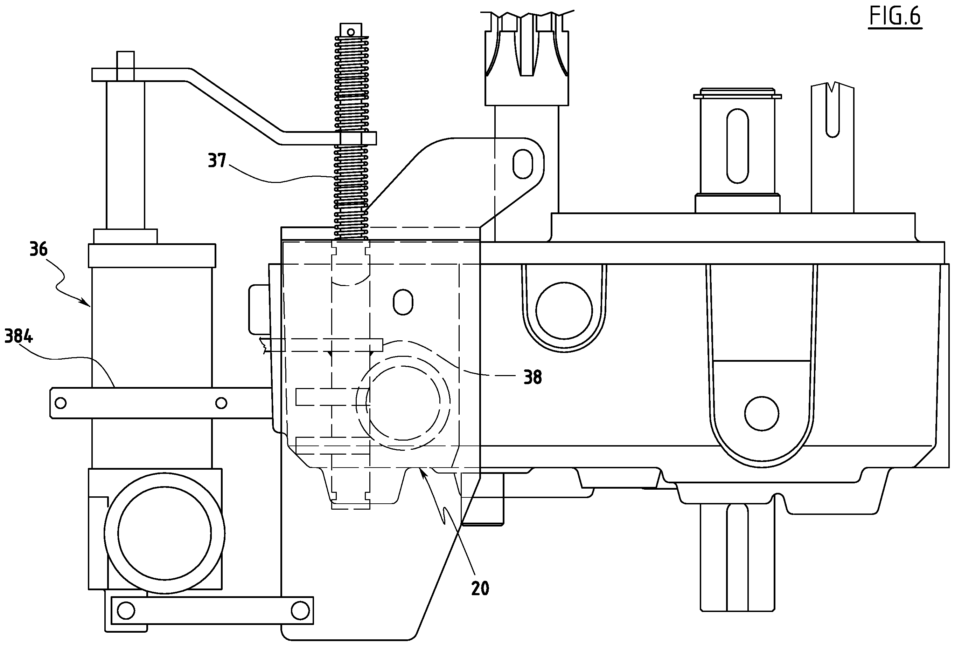

Figure 6 is a view from above of figure 2.

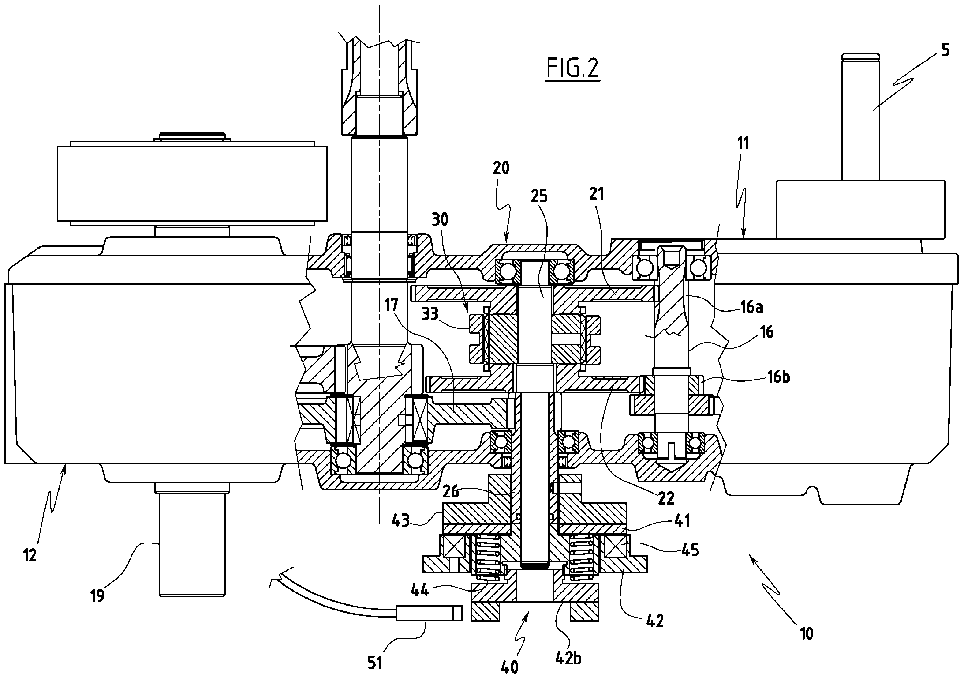

The irrigation plant of the invention comprises a geared mechanical system 10, interposed between the turbine M and the drum D, which is configured so as to receive the rotation energy produced by the hydraulic turbine M and supply the drum D with a lower rotation velocity with respect to the velocity generated by the turbine M, for winding the tube, of which a general section is shown in figure 2.

The mechanical transmission system 10 comprises an upstream portion 11, which is connected in input (more or less directly) to the hydraulic turbine (M) and is connected downstream to a gear-change group 20 able to provide in outlet two different rotation velocities.

In a preferred embodiment, illustrated in the figures, the upstream portion 11 (see figure 2) comprises, upstream, an initial shaft 15 which is connected to the output shaft of the turbine M, and a series of gearings (not illustrated in figure 2 as of usual type) which by means of a plurality of reductions/multiplications of the rotary motion, set a final shaft 16 in rotation located in the downstream end of the same portion 11.

The final shaft 16 transmits its motion, via two gear wheels 16a and 16b having different diameters, contemporaneously to two gear wheels 21 and 22, which are in permanent coupling respectively with the wheel 16a and with the wheel 16b, which define two respective input wheels of the gear-change group 20.

The two wheels 21 and 22 have different diameters and the two wheel couplings 16a-21 and 16b-22 respectively generate a first rotation velocity of the wheel 21 and a second velocity of the wheel 22.

The two wheels 21 and 22 are set coaxially on a shaft 25 to which they are idly coupled.

The shaft 25 defines a first shaft of the gear-change group 20, and is associated to a selector means 30 able to connect, on command and by choice, one of the input wheels 21, 22 with the shaft 25 (described in more detail in the following).

The gear-change group 20 further comprises an output shaft 26, coaxial with the first shaft 25, connected in permanent transmission with the tube-winder drum D.

Further, the gear-change group 20 comprises a mechanical clutch connecting organ 40 which coaxially couples in rotation the first shaft 25 with the output shaft 26, with a possibility of decoupling, able to act in synchrony with the selecting action of the selector means 30.

Downstream of the gear-change group 20, the drive transmission system comprises a downstream portion 12 (see figure 2), in which the motion of the shaft 26 is transmitted (for example, via a cogged wheel 17 which enmeshes with a cogged wheel 26b solidly constrained to the output shaft 26) to a final shaft 19 which directly or indirectly transmits motion to the drum D.

In a preferred embodiment, illustrated in the figures, the first shaft 25 and the output shaft 26, are coaxial and, at least in part, the shaft 25 is located internally of the shaft 26, the ends of which 25a and 26a, located on the same side, are positioned one close to the other; further, the clutch connecting organ 40 comprises a disc 41 and a counter-disc 43 rotating solidly with the two respective ends of the shafts 25, 26, able to be pressed one against another so as to transmit, one to the other, the rotation motion by friction.

In more detail, the shaft 25 is positioned internally of the shaft 26 and exhibits an end 25a, exiting externally of the shaft 26, on which the clutch organ 40 is set; the disc 41 thereof is set on the end of the shaft 25 and rotates solidly therewith, while the counter-disc 43 is set on the near end of the output shaft 26.

The disc 41 faces the counter-disc 43, and is supported by a circular rear support 42, solidly constrained to the first shaft 25; the disc 41 is axially mobile for a brief portion with respect to the circular rear support 42, while it is mobile in rotation solidly therewith; the freedom of movement in axial direction is realised between:
- an engaged position, in which the disc 41 is pressed in contact with the counter-disc 43 with a force that is sufficient to create, by friction, solidarity in rotation, and
- a disengaged position, in which the disc 41 is detached from the counter-disc 43.

The clutch organ 40 further comprises a plurality of thrust springs 44 associated to the rear support 42, able to push with a sufficient pressure on the front disc 41, in the engaged position against the counter-disc 43, and a plurality of electromagnets 45 able to attract, if activated, the disc 41 into the disengaged position, detached from the counter-disc 43.

The selector means 30 is substantially of known type and, in a preferred embodiment illustrated in the figures, comprises a central cogged wheel 33 with an external cogging, solidly constrained to the first shaft 25, positioned in an intermediate position adjacent to two cogged wheels 31 and 32, which have a same cogging as the wheel 33 and are solidly joined and coaxial with the wheel 21 and respective with the wheel 32 of the gear change. A selector is positioned externally of the central wheel 33, which selector is defined by a cogged bushing 35 having an internal cogging which enmeshes with the external cogging of the wheel 33 and the wheels 31 and 32. The cogged bushing 35 is constantly coupled with the central wheel 33 and the axial dimension thereof is substantially the same as or smaller than the central wheel 33. The bushing 35 is able to be axially displaced, on command, between two end positions: a first end position, wherein it is coupled with the central wheel 33 and contemporaneously with the wheel 31, and a second end position, in which it is coupled with the central wheel 33 and contemporaneously with the wheel 32.

The bushing 35 can be displaced into the two end positions using manual or mechanised means.

When the bushing 35 is in the first end position, the first shaft 25 (which is solidly constrained to the wheel 33) is placed in transmission connection with the input wheel 21 (solidly constrained to the wheel 31) defining the 1st gear configuration.

When the bushing 35 is in the second end position, the first shaft 25 is positioned in transmission connection with the input wheel 22 (solidly constrained to the wheel 32) defining the 2nd gear configuration.

When the bushing 35 is in the median position between the two end positions the bushing 35 is coupled only with the central wheel 33, while the two input wheels 21 and 22 are neutral on the shaft 25, and is therefore defined as being in the "neutral" position.

By placing the gear change in the 1st gear position, the movement of the initial shaft 15 is transmitted to the output shaft 26 and from here to the tube winder drum D, with a first predetermined transmission ratio; while placing the gear change in the 2nd gear position, the motion of the initial shaft 15 is transmitted to the output shaft 26 and from here to the tube-winder drum D, with a second and different predetermined transmission ratio.

As described in the introductory part of the present description, the energy for the rotation of the drum D with the winding of the tube B is provided by the irrigation water which actuates the hydraulic turbine M. The water crosses the turbine M, at least in part, and is then directed, through the tube B, to the mobile irrigator A.

The turbine M possesses a by-pass organ, of a usual type and not illustrated in the figures, which enables varying (more or less gradually) the velocity of the rotation motion produced by the turbine, from the maximum value up to excluding the rotation completely.

The rotation motion in output from the turbine M is transmitted, via the initial shaft 15, to the geared mechanical transmission system 10 described in the foregoing, interposed between the turbine M and the drum D, actuating therewith the rotation of the drum D which, in turn, actuates the winding of the tube B and the advancing of the irrigator A on the terrain which is to be irrigated.

In order to obtain a field of variability of the rotation velocity that is greater than what can be obtained with only the hydraulic turbine M, use must be made of the mechanical gear change system, additional to the turbine described above, which for example includes at least two different velocities for the rotation of the output shaft 26, to be transmitted to the drum D.

More precisely, the selector means 30 is activated to change the velocity of the output shaft 26, actuating the following commands in sequence:
- a) first the by-pass organ of the turbine M is set in action for reducing the rotation velocity, or even zeroing the velocity, on the first shaft 25 of the gear-change group 20,
- b) the output shaft 26 is disengaged from the first shaft 25 by means of the clutch connecting organ 40; i.e. by activating the electromagnets 45 which attract the disc 41 in the de-coupled position, detached from the counter-disc 43.
   The two commands a) and b) are actuated in a substantially contemporaneous way, or nearly so,
   As a result of this second operation b), the tube-winder drum D and the part of the transmission mechanism of the rotation which goes from the output shaft 26 up to the drum D, is disconnected from the shaft 25 of the gear change and, due to the great inertia of the drum D, continues to rotate freely (together with the output shaft 26, which remains connected thereto).
- c) thereafter, the selector means 30 is activated (mechanically or manually) to selectively connect, by displacing the bushing 35, one of the input wheels 21, 22 with the shaft 25;
- d) thereafter, the output shaft 25 is connected to the first shaft 26 by means of the clutch connecting organ 40, deactivating the electromagnets 45,
- e) thereafter, the passage of the water through the turbine M is re-established.

To sum up, the change from the 1st to the 2nd gear or vice versa on the shaft 25 is actuated in a condition in which the wheels 21 and 22 and the first shaft 25 are in neutral, i.e. disconnected from the rotation of the drum D, and further have a rotation velocity of practically zero: with the great advantage that in this condition the transfer of the cogged bushing 35 from the coupling with the wheel 31 to the coupling with the wheel 32 or vice versa is done without any jamming, forcing or seizing.

Only after the bushing 35 has been displaced into the desired position of the 1st or 2nd gear can the shaft be connected in rotation with the output shaft 26 and therefore with the rotation of the drum D, which connection is done by means of the clutch discs system 41-43, which does not lead, due to its intrinsic nature, to problems of jamming, forcing or seizing.

In a particular technical solution, the gear-change group 40 comprises a command organ of the selector means 30, having a linear actuator 36 able to axially displace the selector 35 on command for a portion in a direction and for another portion in an opposite direction, in a position such as to connect the input wheels 21, 22 one at a time with the first shaft 25.

In this solution, the linear actuator 36 is mechanically connected to the selector 35 by interposing of a double spring 37 operating in a direction and in the other direction.

In greater detail, the bushing 35 is actuated by a forked bracket 38, having a cursor 381 that is slidable along a fixed rail 382 parallel to the shaft 25 and at a distance therefrom. The end of the mobile organ of the actuator 36 is connected to the cursor 381, which mobile organ produces a translation in one direction or the other of the bracket 38 along the rail 382.

Two parallel abutments 383 are fixed to the cursor, which act in combination with a cam organ 384 that is linearly mobile in a transversal direction with respect to the movement of the cursor 381; the organ 384 has a conical end 385 and is arranged in a geometrical relation with the abutments 393 such that when advanced towards the two abutments 383 the conical end 385 interacts in an intermediate position between the two abutments 383, in contact with one or the other thereof, causing displacement of the cursor 381 (and consequently the selector 35) in a single predetermined position; this position corresponds to the position in which the selector 35 is in neutral.

The cam organ 384 is especially used as an additional safety command, for halting the rotation of the output shaft 26, and therefore the rotation of the drum D, for example when the drum reaches the end-of-winding.

The solution of mechanically connecting the linear actuator 36 to the selector 35 by interposing a double spring 37, enables the intervention of the cam organ 384, for returning the selector 35 into the neutral position, even in a case where the actuator 36 is blocked in an end-run position.

In another particular technical solution, the rear support 42 comprises a rear central element 42b, coaxial to the support 42, having a threaded portion 421 projecting forward, which screws into a corresponding threaded circular cavity 422, coaxial with the portion 421, located on the rear face of the support 42; the springs 44 are inserted in a same number of through-holes made in the support 42 and they rest with the rear end against the front face of the central element 42b; the front end of the springs 44 is instead resting against the rear face of the disc 41.

By screwing the rear central element 42b into the threaded cavity 422 in one direction there is a nearing in an axial direction of the element 42b to the disc 41 and consequently the degree of compression of the springs 44 is increased, while by rotating the element 42b in the opposite direction it is distanced with respect to the disc 41 and consequently the degree of compression of the springs 44 is reduced.

Therefore, by rotating the rear element 42b, in a direction or the other, it is possible to calibrate the degree of compression with which the springs push the disc 41 against the counter-disc, and therefore calibrate the friction force which maintains the disc 41 and the counter-disc 43 solidly coupled.

A first sensor device 51 is also included, which by controlling the rotation of the rear support 42 is able to control the rotation of the first shaft 25, and a second sensor device (not illustrated in the figures) able to control the rotation of the output shaft 26; further, an electronic processor (not illustrated in the figures) is included, which controls the synchronism of the two speeds by means of a comparison of the rotation of the two shafts, and signals any irregularities.

Obviously numerous modifications of a practical-applicational nature can be made to the present invention without forsaking the scope of the inventive idea as claimed in the following.

## Claims

1. A sprinkler irrigation plant with a self-propelling tube-winder drum (D), comprising:
- a mobile irrigator (A) for sprinkle-irrigating large/medium size pieces of terrain, connected to a supply tube (B) of the irrigating water,
- the tube-winder drum (D), about which the supply tube (B) winds, connected to a source of pressurised irrigating water,
- a hydraulic turbine (M) actuated by the irrigating water, able to supply energy for rotation of the drum (D),
- a geared mechanical transmission system (10), interposed between the turbine (M) and the drum (D), able to supply the drum (D) with a lower rotation velocity with respect to the velocity generated by the turbine, for winding the tube (B),
**characterised in that**:
the mechanical transmission system (10), which comprises a gear-change group (20) able to provide in outlet two different rotation differences, where the gear-change group (20), comprises:
- at least two input wheels (21, 22) rotating with respective different velocities,
- a first shaft (25),
- a selector means (30), associated to the first shaft (25), able to connect, on command and by choice, one of the input wheels (21, 22) with the shaft,
- an output shaft (26), coaxial with the first shaft (25), connected in permanent transmission with the tube-winder drum (D),
- a mechanical clutch connecting group (40) which coaxially couples in rotation the first shaft (25) with the output shaft (26), with a possibility of decoupling, able to act in synchrony with the selecting action of the selector means (30).

2. The plant of claim 1, wherein the first shaft (25) and the output shaft (26) are, at least in part, inserted one internally of the other and two ends thereof are located in proximity of one another,
and the clutch connecting organ (40) comprises a disc (41) and a counter-disc (43) rotating solidly with the two respective ends of the shafts (25, 26), able to be pressed one against another so as to transmit, one to the other, the rotation motion by friction.

3. The plant of claim 2, wherein the rotating disc (41) is set on the first shaft (25) and is facing the counter-disc (43) which is set on the output shaft (26), wherein the disc (41) is rotatingly constrained to a rear support (42) solidly constrained to the first shaft (25) and is mobile, for a short portion, only in an axial direction, with respect to the support (42), between an engaged position in which the disc (41) is pressed with a sufficient force in contact with the counter-disc (43) and a disengaged position in which the disc (41) is detached from the counter-disc (43),
and wherein the rear support (42) comprises an associated plurality of thrust springs (44) able to push with a sufficient pressure on the front disc (41), in the engaged position against the counter-disc (43), and a plurality of electromagnets (45) able to attract, if activated, the disc (41) into the disengaged position, detached from the counter-disc (43).

4. The plant of claim 3, **characterised in that** the thrust of the springs (44) is adjustable and further comprises:
- a first sensor device (51) able to control the rotation of the first shaft (25), associated to the clutch connecting organ (40),
- a second sensor device able to control the rotation of the output shaft (26), and
- a processing device able to control the synchrony of the rotation velocities of the two shafts.

5. The plant of claim 1, **characterised in that** the gear-change group (20) comprises a command organ of the selector means (30), having a linear actuator (36) able to axially displace the selector (35) on command for a portion in a direction and for another portion in an opposite direction, in a position such as to connect the input wheels 21, 22 one at a time with the first shaft (25),
wherein the linear actuator (36) is mechanically connected to the selector (35) by interposing of a double spring (37) operating in a direction and in the other direction.

6. An activating method of an self-propelling irrigation plant with a drum, having the characteristics of claim 1 and further comprising a by-pass organ able to vary a rotation velocity of the drum (D) produced by the turbine (M), **characterised in that** for changing the velocity of the output shaft (26) by means of the mechanical system of transmission of the motion (10), it includes actuation in sequence of following commands:
- a) the by-pass organ of the turbine (M) is set in action for reducing the rotation velocity, or even zeroing the velocity, on the first shaft (25) of the gear-change group (20),
- b) the output shaft (26) is disengaged from the first shaft (25) by means of the clutch connecting organ (40);
the two commands a) and b) are actuated in a substantially contemporaneous way, or nearly so,
- c) thereafter, the selector means (30) is activated to connect, by choice, one of the input wheels (21, 22) with the shaft (25),
- d) thereafter, the output shaft (26) is connected to the first shaft (25) by means of the clutch connecting organ (40);
- e) thereafter, the passage of the water through the turbine (M) is re-established.

## Patentansprüche

1. Sprinkler-Berieselungsanlage mit selbstfahrender Schlauchaufwicklungstrommel (D), umfassend:
- einen mobilen Berieseler (A) zum Sprinkler-Berieseln großer/mittelgroßer Geländestücke, der mit einem Zufuhrschlauch (B) für das Berieselungswasser verbunden ist,
- die Schlauchaufwicklungstrommel (D), um die sich der Zufuhrschlauch (B) wickelt, verbunden mit einer Quelle für mit Druck beaufschlagtes Berieselungswasser,
- eine Hydraulikturbine (M), die durch das Berieselungswasser angetrieben wird und in der Lage ist, Energie zur Drehung der Trommel (D) bereitzustellen,
- ein mechanisches, mit Getriebe versehenes Transmissionssystem (10), das zwischen der Turbine (M) und der Trommel(D) eingefügt ist und in der Lage ist, zum Aufwickeln des Schlauchs (B) der Trommel (D) eine geringere Drehgeschwindigkeit in Bezug auf die von der Turbine erzeugte Geschwindigkeit zuzuführen,
**dadurch gekennzeichnet, dass**
das mechanische Transmissionssystem (10), das eine Gangschaltungsgruppe (20) umfasst, in der Lage ist, am Ausgang zwei verschiedene Drehdifferenzen bereitzustellen, wobei die Gangschaltungsgruppe (20) umfasst:
- mindestens zwei Antriebsräder (21, 22), die sich jeweils mit unterschiedlichen Geschwindigkeiten drehen,
- eine erste Welle (25),
- ein Selektormittel (30), das der ersten Welle (25) zugeordnet ist und in der Lage ist, auf Befehl und nach Wahl eines der Antriebsräder (21, 22) mit der Welle zu verbinden,
- eine Abtriebswelle (26), die koaxial mit der ersten Welle (25) liegt und in permanenter Transmission mit der Schlauchaufwicklungstrommel (D) verbunden ist,
- eine mechanische Kupplungsverbindungsgruppe (40), die die erste Welle (25) koaxial in Drehung mit der Abtriebswelle (26) koppelt, mit einer Möglichkeit der Entkopplung, die in der Lage ist, synchron mit der Auswahlaktion des Selektormittels (30) zu agieren.

2. Anlage nach Anspruch 1, wobei die erste Welle (25) und die Abtriebswelle (26) zumindest teilweise ineinander eingesetzt sind und sich deren beide Enden nahe beieinander befinden,
und das Kupplungsverbindungsorgan (40) eine Scheibe (41) und eine Gegenscheibe (43) umfasst, die sich fest verbunden mit den zwei entsprechenden Enden der Wellen (25, 26) drehen und aneinander gepresst werden können, so dass die Drehbewegung durch Reibung von einer auf die andere übertragen wird.

3. Anlage nach Anspruch 2, wobei die drehende Scheibe (41) auf die erste Welle (25) gesetzt ist und der Gegenscheibe (43) zugewandt ist, die auf die Abtriebswelle (26) gesetzt ist, wobei die Scheibe (41) drehbar auf einer hinteren Stütze (42) befestigt ist, welche fest verbunden an der ersten Welle (25) befestigt ist und über einen kurzen Abschnitt ausschließlich in axialer Richtung in Bezug auf die Stütze (42) mobil ist, zwischen einer Eingriffsposition, in der die Scheibe (41) mit ausreichender Kraft in den Kontakt mit der Gegenscheibe (43) gepresst ist, und einer gelösten Position, in der die Scheibe (41) von der Gegenscheibe (43) getrennt ist,
und wobei die hintere Stütze (42) eine zugeordnete Mehrzahl von Gegendruckfedern (44) umfasst, die in der Lage sind, in der Eingriffsposition an der Gegenscheibe (43) anliegend mit ausreichendem Druck auf die vordere Scheibe (41) zu drücken, und eine Mehrzahl von Elektromagneten (45), die in der Lage sind, im aktivierten Zustand die Scheibe (41) in die gelöste Position, getrennt von der Gegenscheibe (43),
anzuziehen.

4. Anlage nach Anspruch 3, **dadurch gekennzeichnet, dass** der Gegendruck der Federn (44) einstellbar ist, und ferner umfasst:
- eine erste Sensorvorrichtung (51), die in der Lage ist, die Drehung der ersten Welle (25) zu steuern, und dem Kupplungsverbindungsorgan (40) zugeordnet ist,
- eine zweite Sensorvorrichtung, die in der Lage ist, die Drehung der Abtriebswelle (26) zu steuern, und
- eine Verarbeitungsvorrichtung, die in der Lage ist, die Synchronität der Drehgeschwindigkeiten der zwei Wellen zu steuern.

5. Anlage nach Anspruch 1, **dadurch gekennzeichnet, dass** die Gangschaltungsgruppe (20) ein Befehlsorgan des Selektormittels (30) umfasst, das einen Linearantrieb (36) aufweist, der in der Lage ist, den Selektor (35) auf Befehl um einen Abschnitt in einer Richtung zu verschieben und um einen anderen Abschnitt in einer entgegengesetzten Richtung, in einer Position, so dass die Antriebsräder 21, 22 nacheinander mit der ersten Welle (25) verbunden werden,
wobei der Linearantrieb (36) mechanisch mit dem Selektor (35) verbunden ist, indem eine Doppelfeder (37) eingeschoben ist, die in eine Richtung und in die andere Richtung wirkt.

6. Aktivierungsverfahren für eine selbstfahrende Berieselungsanlage mit einer Trommel, die die Eigenschaften von Anspruch 1 aufweist und ferner ein Umleitungsorgan umfasst, das in der Lage ist, eine durch die Turbine (M) erzeugte Drehgeschwindigkeit der Trommel (D) zu variieren, **dadurch gekennzeichnet, dass** es zum Ändern der Geschwindigkeit der Abtriebswelle (26) mittels des mechanischen Systems zur Übertragung der Bewegung (10) das Antreiben in der Reihenfolge der folgenden Befehle enthält:
- a) das Umleitungsorgan der Turbine (M) wird in Aktion versetzt, um die Drehgeschwindigkeit an der ersten Welle (25) der Gangschaltungsgruppe (20) zu reduzieren oder sogar die Drehung auf Null zu fahren,
- b) die Abtriebswelle (26) wird mittels des Kupplungsverbindungsorgans (40) von der ersten Welle (25) gelöst, die zwei Befehle a) und b) werden im Wesentlichen gleichzeitig oder nahezu gleichzeitig ausgelöst,
- c) danach wird das Selektormittel (30) aktiviert, um nach Wahl eines der Antriebsräder (21, 22) mit der Welle (25) zu verbinden,
- d) danach wird die Abtriebswelle (26) mittels des Kupplungsverbindungsorgans (40) mit der ersten Welle (25) verbunden,
- e) danach wird der Durchtritt des Wassers durch die Turbine (M) wiederhergestellt.

## Revendications

1. Installation d'irrigation par aspersion équipée d'un cylindre d'enroulement de tuyau autopropulsé (D), comprenant :
- un irrigateur mobile (A) pour l'irrigation par aspersion de terrains moyens à grands, relié à un tuyau d'alimentation (B) en eau d'irrigation,
- le cylindre d'enroulement de tuyau (D), autour duquel le tuyau d'alimentation (B) s'enroule, relié à une source d'eau d'irrigation pressurisée,
- une turbine hydraulique (M) actionnée par l'eau d'irrigation, capable de fournir de l'énergie pour la rotation du cylindre (D),
- un système de transmission mécanique à engrenage (10), interposé entre la turbine (M) et le cylindre (D), capable d'alimenter le cylindre (D) à une vitesse de rotation inférieure à la vitesse générée par la turbine, pour enrouler le tuyau (B),
**caractérisée en ce que** :
le système de transmission mécanique (10), qui comprend un groupe de changement de vitesse (20) capable de fournir dans la sortie deux différences de rotations différentes, où le groupe de changement de vitesse (20) comprend :
- au moins deux roues d'entrée (21, 22) tournant à des vitesses différentes respectives,
- un premier arbre (25),
- un moyen de sélection (30), associé au premier arbre (25), capable de connecter, sur commande et par choix, l'une des roues d'entrée (21, 22) à l'arbre,
- un arbre de sortie (26), coaxial au premier arbre (25), connecté en transmission permanente au cylindre d'enroulement de tuyau (D),
- un groupe de liaison d'embrayage mécanique (40) qui couple coaxialement en rotation le premier arbre (25) à l'arbre de sortie (26), avec une possibilité de découplage, capable d'agir de manière synchrone avec l'action de sélection du moyen de sélection (30).

2. Installation selon la revendication 1, dans laquelle le premier arbre (25) et l'arbre de sortie (26) sont, au moins en partie, insérés l'un à l'intérieur de l'autre et deux de leurs extrémités sont situées à proximité l'une de l'autre,
et l'organe de connexion de l'embrayage (40) comprend un disque (41) et un contre-disque (43) pivotant solidairement avec les deux extrémités respectives des arbres (25, 26), capables d'être comprimés l'un contre l'autre afin de transmettre, l'un à l'autre, le mouvement de rotation par friction.

3. Installation selon la revendication 2, dans laquelle le disque pivotant (41) est configuré sur le premier arbre (25) et est orienté vers le contre-disque (43) qui est configuré sur l'arbre de sortie (26), dans laquelle le disque (41) est rotativement contraint à un support arrière (42) solidairement contraint au premier arbre (25) et est mobile, pour une petite partie, uniquement dans une direction axiale, par rapport au support (42), entre une position engagée dans laquelle le disque (41) est comprimé avec une force suffisante sur le contre-disque (43) et une position désengagée dans laquelle le disque (41) est détaché du contre-disque (43),
et dans laquelle le support arrière (42) comprend une pluralité associée de ressorts d'avancement (44) capables de pousser avec une pression suffisante le disque avant (41), dans la position engagée contre le contre-disque (43), et une pluralité d'électroaimants (45) capables d'attirer, si activés, le disque (41) dans la position désengagée, détaché du contre-disque (43).

4. Installation selon la revendication 3, **caractérisée en ce que** l'avancement des ressorts (44) est réglable et comprend en outre :
- un premier dispositif de détection (51) capable de contrôler la rotation du premier arbre (25), associé à l'organe de connexion de l'embrayage (40),
- un second dispositif de détection capable de contrôler la rotation de l'arbre de sortie (26), et
- un dispositif de traitement capable de contrôler la synchronisation des vitesses de rotation des deux arbres.

5. Installation selon la revendication 1, **caractérisée en ce que** le groupe de changement de vitesse (20) comprend un organe de commande du moyen de sélection (30), disposant d'un actionneur linéaire (36) capable de déplacer axialement le sélecteur (35) sur commande pour une partie dans une direction et pour une autre partie dans une direction opposée, dans une position permettant de connecter les roues d'entrée 21, 22 l'une après l'autre au premier arbre
(25),
dans laquelle l'actionneur linéaire (36) est mécaniquement connecté au sélectionneur (35) en interposant un double ressort (37) fonctionnant dans une direction et dans l'autre direction.

6. Méthode d'activation d'une installation d'irrigation autopropulsée équipée d'un cylindre, disposant des caractéristiques de la revendication 1 et comprenant en outre un organe de dérivation capable de faire varier une vitesse de rotation du cylindre (D) produite par la turbine (M), **caractérisée en ce que** pour la modification de la vitesse de l'arbre de sortie (26) au moyen du système mécanique de transmission du mouvement (10), elle comprend l'actionnement en séquence des commandes suivantes :
- a) l'organe de dérivation de la turbine (M) est actionné pour réduire la vitesse de rotation, voire la mettre à zéro, sur le premier arbre (25) du groupe de changement de vitesse (20),
- b) l'arbre de sortie (26) est désengagé du premier arbre (25) au moyen de l'organe de connexion de l'embrayage (40) ;
les deux commandes a) et b) sont actionnées de façon sensiblement simultanée, ou presque,
- c) ultérieurement, le moyen de sélection (30) est activé pour connecter, par choix, l'une des roues d'entrée (21, 22) à l'arbre (25),
- d) ultérieurement, l'arbre de sortie (26) est connecté au premier arbre (25) au moyen de l'organe de connexion de l'embrayage (40) ;
- e) ultérieurement, le passage de l'eau dans la turbine (M) est rétabli.
